# EUROPEAN PATENT APPLICATION

(11) **EP 4 319 395 A1**
(43) Date of publication of application: **07.02.2024**
(21) Application number: 22778528.4
(22) Date of filing: 11.03.2022
(51) Int. Cl.: H04W 72/04

(54) **CHANNEL MULTIPLEXING METHOD AND APPARATUS, AND COMMUNICATION DEVICE**

(30) Priority: 02.04.2021 CN 202110361972
(71) Applicant: Datang Mobile Communications Equipment Co., Ltd., Beijing 100085 (CN)
(72) Inventor: GAO, Xuejuan, Beijing 100085 (CN); SI, Qianqian, Beijing 100085 (CN)
(74) Representative: Maiwald GmbH
(86) International application number: PCT/CN2022/080431
(87) International publication number: WO 2022/206344

(57) **Abstract**

This disclosure provides a channel multiplexing method, a channel multiplexing apparatus and a communication device, and pertains to the field of wireless communication technology. The channel multiplexing method includes: determining whether uplink channels having different priorities are allowed to be multiplexed for transmission in case that the uplink channels overlap in a time domain; in case that it is determined that the multiplexing transmission of the uplink channels is allowed, determining that the uplink channels need to meet a predetermined timeline; and in case that it is determined that the multiplexing transmission of the uplink channels is not allowed, determining that the uplink channels do not need to meet the predetermined timeline.

## Description

### CROSS-REFERENCE TO RELATED APPLICATION

This application claims priority to Chinese patent application No. 202110361972.3 filed in China on April 2, 2021, a disclosure of which is incorporated herein by reference in its entirety.

### TECHNICAL FIELD

The present disclosure relates to the field of wireless communication technology, in particular to a channel multiplexing method, a channel multiplexing apparatus, and a communication device.

### BACKGROUND

A 5^{th}-Generation New RAT (5G NR) system, where the RAT referring to radio access technology, supports transmission of uplink channels having different physical layer priorities. However, a resource collision may occur between the uplink channels having different physical layer priorities of a same terminal (also referred to as user equipment (UE)). For example, symbols occupied by the uplink channels having different priorities on a same carrier overlap. As a solution in the related art, a channel having a higher physical layer priority among the colliding channels is transmitted, while a channel having a lower physical layer priority is discarded. However, in order to prevent uplink control information (UCI) carried on the channel having the lower priority from being discarded, it is recently proposed to support multiplexing of UCIs of a plurality of physical uplink control channels (PUCCHs) having different priorities onto a same channel for transmission.

### SUMMARY

In view of the above deficiencies, the present disclosure provides a channel multiplexing method, a channel multiplexing apparatus and a communication device, to address the problem in the related art that, in a scenario where multiplexing transmission of channels having different priorities is supported, a low transmission latency characteristic of the channel having a high priority cannot be ensured and a scheduling flexibility of the channel having the high priority cannot be retained.

To solve the above technical problem, the present disclosure provides a channel multiplexing method, performed by a communication device, including: determining whether uplink channels having different priorities are allowed to be multiplexed for transmission in case that the uplink channels overlap in a time domain; determining that the uplink channels need to meet a predetermined timeline in case that the multiplexing transmission of the uplink channels is allowed; and determining that the uplink channels do not need to meet the predetermined timeline in case that the multiplexing transmission of the uplink channels is not allowed.

Optionally, the determining whether the multiplexing transmission of the uplink channels having different priorities is allowed includes: determining, in accordance with configuration signaling, whether the multiplexing transmission of the uplink channels having different priorities is allowed, wherein the configuration signaling includes at least one of: downlink control information (DCI) in a downlink control channel corresponding to the uplink channel, wherein the DCI carries indication information; or high-layer signaling.

Optionally, the indication information indicates whether the multiplexing transmission of the uplink channels is allowed, or the indication information indicates information for determining a reference bit quantity *m* of UCI having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

Optionally, the determining whether the multiplexing transmission of the uplink channels having different priorities is allowed includes: determining a reference bit quantity n of UCI having a low priority which is transmitted simultaneously with UCI having a high priority on a same uplink channel in accordance with a bit quantity of the UCI having the high priority or a bit range corresponding to the bit quantity, wherein each bit quantity of UCI having the high priority or each bit range corresponding to the bit quantity corresponds to the reference bit quantity *n* of UCI having the low priority, wherein the UCI having the low priority and the UCI having the high priority are UCIs carried on the overlapped uplink channels respectively; and determining, in accordance with the reference bit quantity *n,* whether the multiplexing transmission of the uplink channels having different priorities is allowed.

Optionally, the communication device is a base station, and the channel multiplexing method further includes: in case that the uplink channels do not need to meet the predetermined timeline, omitting a step of ensuring that the uplink channels meet the predetermined timeline when scheduling or configuring the uplink channels.

Optionally, the communication device is a base station, and the channel multiplexing method further includes: in case that the uplink channels need to meet the predetermined timeline, ensuring that the uplink channels meet the predetermined timeline when scheduling or configuring the uplink channels.

Optionally, the communication device is a terminal, and the channel multiplexing method further includes: in case that the uplink channels need to meet the predetermined timeline, checking, prior to the multiplexing transmission, whether the uplink channel meets the predetermined timeline.

Optionally, the communication device is a terminal, and the channel multiplexing method further includes: in case that the uplink channels do not need to meet the predetermined timeline, omitting a step of checking, prior to the multiplexing transmission, whether the uplink channel meets the predetermined timeline.

The present disclosure further provides a communication device, including a memory, a transceiver and a processor. The memory is configured to store therein a computer program, and the transceiver is configured to transmit and receive data under the control of the processor. The processor is configured to read the computer program in the memory and implement: determining whether uplink channels having different priorities are allowed to be multiplexed for transmission in case that the uplink channels overlap in a time domain; determining that the uplink channels need to meet a predetermined timeline in case that it is determined that the multiplexing transmission of the uplink channels is allowed; and determining that the uplink channels do not need to meet the predetermined timeline in case that it is determined that the multiplexing transmission of the uplink channels is not allowed.

Optionally, the determining whether the multiplexing transmission of the uplink channels having different priorities is allowed includes: determining, in accordance with configuration signaling, whether the multiplexing transmission of the uplink channels having different priorities is allowed, and the configuration signaling includes at least one of: DCI in a downlink control channel corresponding to the uplink channel, wherein the DCI carries indication information; or high-layer signaling.

Optionally, the indication information indicates whether the multiplexing transmission of the uplink channels is allowed, or the indication information indicates information for determining a reference bit quantity *m* of UCI having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

Optionally, the determining whether the multiplexing transmission of the uplink channels having different priorities is allowed includes: determining a reference bit quantity n of UCI having a low priority which is transmitted simultaneously with UCI having a high priority on a same uplink channel in accordance with a bit quantity of the UCI having the high priority or a bit range corresponding to the bit quantity, wherein each bit quantity of UCI having the high priority or each bit range corresponding to the bit quantity corresponds to the reference bit quantity n of UCI having the low priority, wherein the UCI having the low priority and the UCI having the high priority are UCIs carried on the overlapped uplink channels respectively; and determining, in accordance with the reference bit quantity n, whether the multiplexing transmission of the uplink channels having different priorities is allowed.

Optionally, the communication device is a base station, and the processor is further configured to implement: in case that it is determined that the uplink channels do not need to meet the predetermined timeline, omitting a step of ensuring that the uplink channels meet the predetermined timeline when scheduling or configuring the uplink channels.

Optionally, the communication device is a base station, and the processor is further configured to implement: in case that it is determined that the uplink channels need to meet the predetermined timeline, ensuring that the uplink channels meet the predetermined timeline when scheduling or configuring the uplink channels.

Optionally, the communication device is a terminal, and the processor is further configured to implement: in case that it is determined that the uplink channels need to meet the predetermined timeline, checking, prior to the multiplexing transmission, whether the uplink channels meet the predetermined timeline.

Optionally, the communication device is a terminal, and the processor is further configured to implement: in case that it is determined that the uplink channels do not need to meet the predetermined timeline, omitting a step of checking, prior to the multiplexing transmission, whether the uplink channels meet the predetermined timeline.

The present disclosure further provides a channel multiplexing apparatus, including: a first determination unit, configured to determine whether uplink channels having different priorities are allowed to be multiplexed for transmission in case that the uplink channels overlap in a time domain; a second determination unit, configured to determining that the uplink channels need to meet a predetermined timeline in case that it is determined that the multiplexing transmission of the uplink channels is allowed; and a third determination unit, configured to determine that the uplink channels do not need to meet the predetermined timeline in case that it is determined that the multiplexing transmission of the uplink channels is not allowed.

Optionally, the first determination unit is configured to determine, in accordance with configuration signaling, whether the multiplexing transmission of the uplink channels having different priorities is allowed, wherein the configuration signaling includes at least one of: DCI in a downlink control channel corresponding to the uplink channel, wherein the DCI carries indication information; or high-layer signaling.

Optionally, the indication information indicates whether the multiplexing transmission of the uplink channels is allowed, or the indication information indicates information for determining a reference bit quantity *m* of UCI having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

Optionally, the first determination unit includes: a reference bit quantity determination unit, configured to determine a reference bit quantity *n* of UCI having a low priority which is transmitted simultaneously with UCI having a high priority on a same uplink channel in accordance with a bit quantity of the UCI having the high priority or a bit range corresponding to the bit quantity, wherein each bit quantity of UCI having the high priority or each bit range corresponding to the bit quantity corresponds to the reference bit quantity *n* of UCI having the low priority, wherein the UCI having the low priority and the UCI having the high priority are UCIs carried on the overlapped uplink channels respectively; and a multiplexing transmission determination unit, configured to determine, in accordance with the reference bit quantity n, whether the multiplexing transmission of the uplink channels having different priorities is allowed.

Optionally, the channel multiplexing apparatus is applied in a base station, and further includes: a first scheduling and configuration unit configured to, in case that it is determined that the uplink channels do not need to meet the predetermined timeline, omit a step of ensuring that the uplink channels meet the predetermined timeline when scheduling or configuring the uplink channels.

Optionally, the channel multiplexing apparatus is applied in a base station, and further includes: a second scheduling and configuration unit configured to, in case that it is determined that the uplink channels need to meet the predetermined timeline, ensure that the uplink channels meet the predetermined timeline when scheduling or configuring the uplink channels.

Optionally, the channel multiplexing apparatus is applied in a terminal, and further includes: a first checking unit configured to, in case that it is determined that the uplink channels need to meet the predetermined timeline, check, prior to the multiplexing transmission, whether the uplink channels meet the predetermined timeline.

Optionally, the channel multiplexing apparatus is applied in a terminal, and further includes: a second checking unit configured to, in case that it is determined that the uplink channels do not need to meet the predetermined timeline, omit a step of checking, prior to the multiplexing transmission, whether the uplink channels meet the predetermined timeline.

The present disclosure further provides a processor-readable storage medium storing therein a computer program. The computer program is configured to be executed by a processor to implement the above-mentioned method.

The solution of the present disclosure has the following beneficial effects.

Embodiments of the present disclosure provide a multiplexing transmission scheme for the case that a collision occurs between uplink channels having different priorities, in which whether the uplink channels need to meet the predetermined timeline is determined in accordance with a determination result as to whether multiplexing transmission of UCIs having different priorities is supported. When it is determined that multiplexing transmission of UCIs having different priorities is not supported or performed, it is unnecessary to determine whether the channels overlapping with each other meet the timeline. As a result, the scheduling of an uplink channel having a high priority is not limited, so it is able to improve the transmission flexibility of the uplink channel having the high priority, and ensure that a transmission latency meets the requirement.

### BRIEF DESCRIPTION OF THE DRAWINGS

Fig. 1 is a schematic structural diagram of a network to which embodiments of the present disclosure are applicable;
Fig. 2 is a flow chart of a channel multiplexing method according to an embodiment of the present disclosure;
Fig. 3 is a schematic view showing a situation where PUCCHs having different priorities overlap;
Fig. 4 is a schematic view showing a situation where multiplexing transmission is supported according to an embodiment of the present disclosure;
Fig. 5 is a schematic view showing a situation where the multiplexing transmission is not supported according to an embodiment of the present disclosure;
Fig. 6 is a schematic structural diagram of a communication device according to an embodiment of the present disclosure; and
Fig. 7 is a schematic structural diagram of a channel multiplexing apparatus according to an embodiment of the present disclosure.

### DETAILED DESCRIPTION

The term "and/or" in the embodiments of the present disclosure describes the association relationship of associated objects, and indicates that there may be three relationships, for example, A and/or B may indicate three situations: A exists alone, A and B exist simultaneously, and B exists alone. The symbol "/" generally indicates that the objects connected by the symbol are in an "or" relationship.

The expression "a plurality of" in the embodiments of the present disclosure refers to two or more, and other quantifiers are similar thereto.

The technical solutions in the embodiments of the present disclosure will be clearly and completely described below in conjunction with the drawings in the embodiments of the present disclosure, obviously, the described embodiments are only some of the embodiments of the present disclosure, rather than all of embodiments. Based on the embodiments in the present disclosure, all other embodiments obtained by those ordinarily skilled in the art without making creative efforts belong to the scope of the present disclosure.

Embodiments of the present disclosure provide a channel multiplexing method, a channel multiplexing apparatus and a communication device, so as to improve the transmission flexibility of an uplink channel having a high priority, and ensure that a transmission latency meets the requirement.

The method and the apparatus are provided on the basis of a same inventive concept, and because a problem-solving principle underlying the method is similar to that of the apparatus and the communication device, for the specific implementation of one of the method, apparatus and communication device, references may be made to another one of the method, apparatus and communication device, and a repeated description is omitted.

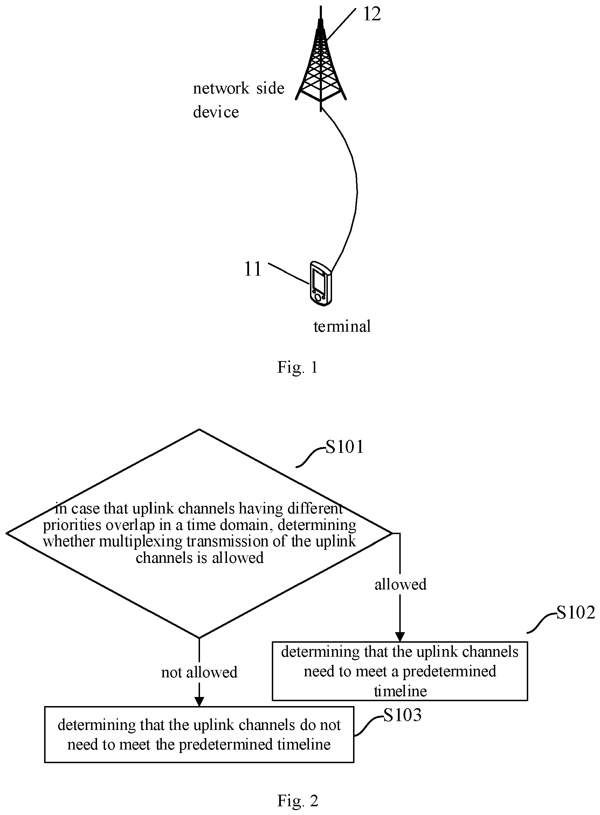

Fig. 1 is a schematic structural diagram of a network to which embodiments of the present disclosure are applicable. As shown in Fig. 1, the network includes a terminal 11 and a base station 12. The terminal 11 may be a user equipment (UE) or any other terminal device, e.g., mobile phone, tablet personal computer, laptop computer, personal digital assistant (PDA), mobile Internet device (MID) or wearable device. It should be appreciated that, a specific type of the terminal is not particularly limited herein. The base station 12 may be a macro base station, a Long Term Evolution (LTE) evolved Node B (eNB), a 5G NR Node B (NB), etc.; or the network side device may be a micro base station (such as a low power node (LPN), a pico base station or a femto base station), an access point (AP), or a network node made up of a central unit (CU) and a plurality of transmission reception points (TRPs) managed and controlled by the CU. It should be appreciated that, a specific type of the network side device is not particularly limited herein.

Firstly, the multiplexing transmission of uplink channels having different priorities will be described hereinafter.

### 1. Transmission of channels having different physical layer priorities

One UE may support different types of services, such as an enhanced Mobile Broadband (eMBB) service and an Ultra-Reliable and Low Latency Communication (URLLC) service. Different types of services have different requirements on reliability and transmission latency. URLLC service flows may be sporadic and occur irregularly, so reserving different system resources separately for different services leads to a relatively large system resource overhead, and the resources reserved for the URLLC are not used most of the time. A feasible attempt to improve the utilization of system resources may be supporting multiplexing transmission of different services on a same resource. There may exist such a situation where one data transmission scheduled earlier is interrupted or cancelled by another data transmission scheduled later. For example, when one UE has been scheduled to transmit an eMBB service on resources 1 and then a URLLC service arrives, the transmission of the URLLC service needs to be scheduled as soon as possible so as to meet the requirement on latency. At this time, all of, or a part of, resources (including time-domain resources and/or frequency-domain resources) in the resources 1 which have already been allocated to the eMBB service may be occupied by the URLLC transmission. For example, the URLLC transmission is scheduled on all of, or a part of, symbols in the time-domain resource (a symbol set) which has been allocated to the eMBB service on a same carrier, despite of whether the overlapping occurs in terms of frequency-domain resource; because it is impossible to transmit two uplink channels simultaneously on a same carrier and at a same time instant, the eMBB service is interrupted or canceled by the URLLC service.

Different priorities are defined for different services in order to prevent the mutual influences between the services. Thereby, in the case of a resource collision, a channel having a high priority is transmitted while a channel having a low priority is discarded. As a result, in order to better support the transmission of different services having different demands, a physical layer priority has been introduced. It has been specified, in case that there is a collision between channels having different physical layer priorities, i.e., when a plurality of PUCCHs overlaps with each other in a time domain on a same carrier or when a PUCCH overlaps with a physical uplink shared channel (PUSCH) in a time domain on a same carrier, the channel having a low priority is discarded and only a channel having a high priority is transmitted.

The physical layer priorities of the PUCCH and the PUSCH may be obtained by default, or may be dynamically indicated through DCI, or may be semi-statically configured through radio resource control (RRC). For example, when a PUCCH is carrying a scheduling request (SR), the priority of the PUCCH is determined in accordance with a priority of the SR carried by the PUCCH, and the priority of each SR configuration is configured through high-layer signaling. When the PUCCH is carrying a hybrid automatic repeat request-acknowledgment (HARQ-ACK) for a semi-persistent scheduling (SPS) physical downlink shared channel (PDSCH) or is carrying an HARQ-ACK for a physical downlink control channel (PDCCH) indicating SPS resource release (i.e., SPS PDSCH release), the priority of the PUCCH is determined in accordance with an HARQ-ACK codebook index configured for the SPS PDSCH through high-layer signaling, e.g., an HARQ-ACK codebook index of 0 corresponding to a low priority, and an HARQ-ACK codebook index of 1 corresponding to a high priority. When the PUCCH is carrying channel state information (CSI) (including periodic CSI and semi-persistent CSI (SP-CSI)), the priority of the PUCCH is a low priority by default. When the DCI includes a priority indication field, the priority of the PUCCH or PUSCH may be obtained in accordance with the priority indication field in the DCI (or PDCCH; in the present disclosure, the PDCCH may be deemed as being equivalent to the DCI, since the DCI is a specific format of PDCCH transmission, and having a corresponding DCI is equivalent to having a corresponding PDCCH) corresponding to the PUCCH or PUSCH. For example, the DCI used by the PDCCH includes the priority indication field, then when one PDSCH is scheduled by the PDCCH, a priority of a PUCCH carrying an HARQ_ACK for the PDSCH may be indicated through the priority indication field, and when one PUSCH is scheduled by the PDCCH, a priority of the scheduled PUSCH may be indicated through the priority indication field, wherein the PUSCH includes a PUSCH merely carrying a transport block (TB), a PUSCH merely carrying aperiodic CSI (A-CSI), or a PUSCH carrying both the TB and the A-CSI. For the PUSCH carrying the SP-CSI, its priority may be obtained through the priority indication field in the DCI activating the PUSCH carrying the SP-CSI. If the DCI does not include the priority indication field or a priority is not configured by high layer signaling, a low priority is assumed by default.

### 2. UCI transmission in 5G NR

UCI includes such information as HARQ-ACK, CSI or SR, and UCI is transmitted on a PUCCH. The HARQ-ACK includes acknowledgement (ACK) and non-acknowledgement (NACK), and is used for providing a feedback on the PDSCH or the PDCCH indicating SPS resource release (SPS PDSCH release), to notify a base station whether the PDSCH or the PDCCH indicating the SPS PDSCH release is received correctly. CSI is used for providing a feedback on downlink channel quality, so as to help the base station to perform downlink scheduling in a better manner, e.g., selecting a modulation and coding scheme (MCS), configuring an appropriate resource block (RB), or the like in accordance with the CSI. The SR is used by a terminal to request, from the base station, transmission resources of the PUSCH carrying an uplink service when the uplink service needs to be transmitted by the terminal.

### 3. Overlapping between PUCCH and PUCCH/PUSCH having a same priority

NR does not support concurrent transmission of PUCCH and PUSCH at a same time instant, despite of whether the PUCCH and PUSCH are on a same carrier or on different carriers. When a PUCCH overlaps with a PUSCH on a time-domain resource (unless specifically defined, PUCCH and PUSCH generally refer to a PUCCH and PUSCH without repetition), UCI (usually the HARQ-ACK and CSI) may be transferred from the PUCCH to one PUSCH for transmission in case that a predetermined timeline is met. If there is the SR, the SR is not transmitted on the PUSCH and instead it is discarded. If there are a plurality of PUSCHs overlapping with the PUCCH, then one PUSCH is selected in accordance with a predetermined rule, e.g., a PUSCH carrying the A-CSI is selected preferentially. If there are a PUSCH scheduled by the PDCCH (a dynamic grant (DG) PUSCH) and a PUSCH not scheduled by the PDCCH (a configured grant (CG) PUSCH, a SP-CSI PUSCH or the like), the DG PUSCH is selected preferentially, and after a selection has been made in accordance with the above-mentioned rule and if there are PUSCHs on a plurality of carriers, a PUSCH on a carrier with a less carrier index is selected. If the selected carrier has a plurality of PUSCHs not overlapping with each other in the time domain but overlapping with the PUCCH, an earliest PUSCH is selected.

Next, a technical problem in conventional uplink channel multiplexing transmission technology will be described hereinafter.

In the related art, in order to ensure that, when uplink channels having different priorities are multiplexed for transmission, information about whether an earlier initiated channel overlaps with a later initiated channel may be obtained before preparation of the earlier initiated channel and thereby a decision as to the multiplexing transmission may be made in accordance with a multiplexing rule, it is required that the uplink channels to be multiplexed meet a timeline for the multiplexing. However, a channel having a high priority usually carries UCI or data of an important and latency-sensitive service. In case that the channel having a high priority is to be transmitted by occupying time-domain resources which have been scheduled for the transmission of a channel having a low priority, and if the timeline for the multiplexing were always met, a great restriction would be imposed on the scheduling of the channel having a high priority, thereby leading to a significant increase of the latency of the channel having a high priority. Currently, there is no definite method for supporting multiplexing transmission of channels having different priorities that can ensure a low transmission latency characteristic of the channel having a high priority while retaining sufficient scheduling flexibility of the channel having a high priority.

In order to solve the above-mentioned problem, the present disclosure provides the following technical solutions.

Fig. 2 is a flow chart of a channel multiplexing method according to an embodiment of the present disclosure. The method is performed by a communication device, and includes the following steps S101 to S103.

S101: in case that uplink channels having different priorities overlap in a time domain, determining whether the multiplexing transmission of the uplink channels having different priorities is allowed.

That the uplink channels having different priorities overlapping with each other in the time domain refers to that there is a collision between the uplink channels having different priorities.

S102: in case that it is determined that the uplink channels having different priorities are allowed to be multiplexed for transmission, determining that the uplink channels need to meet a predetermined timeline.

S103: in case that it is determined that the multiplexing transmission of the uplink channels is not allowed, determining that the uplink channels do not need to meet the predetermined timeline.

The multiplexing transmission refers to simultaneous transmission of information carried by the uplink channels having different priorities on a same uplink channel. If it is determined the uplink channels having different priorities are not allowed to be multiplexed for transmission, an uplink channel having a low priority is discarded.

Embodiments of the present disclosure provide a multiplexing transmission method for the case that a collision occurs between uplink channels having different priorities, in which whether the uplink channels need to meet the predetermined timeline is determined in accordance with a determination result as to whether multiplexing transmission of UCIs having different priorities is supported. When it is determined that multiplexing transmission of UCIs having different priorities is not supported or performed, it is unnecessary to determine whether the channels overlapping with each other meet the timeline. As a result, the scheduling of an uplink channel having a high priority is not limited, so it is able to improve the transmission flexibility of the uplink channel having the high priority, and ensure that a transmission latency meets the requirement.

Optionally, the determining whether the multiplexing transmission of the uplink channels having different priorities is allowed includes: determining, in accordance with configuration signaling, whether the multiplexing transmission of the uplink channels having different priorities is allowed, wherein the configuration signaling includes at least one of:
DCI in a downlink control channel corresponding to the uplink channel, wherein the DCI carries indication information; here, the uplink channel may specifically be one or more uplink channels of the uplink channels having different priorities and overlapping with each other in the time domain; or
high-layer signaling.

In other words, the determining, in accordance with the configuration signaling, whether the multiplexing transmission of the uplink channels having different priorities is allowed specifically includes:
determining, in accordance with the indication information in the downlink control channel corresponding to the uplink channel, whether the multiplexing transmission of the uplink channels having different priorities is allowed; or
determining, in accordance with the high-layer signaling, whether the multiplexing transmission of the uplink channels having different priorities is allowed. For example, whether the multiplexing transmission of the uplink channels having different priorities is supported (i.e., allowed) may be configured semi-statically.

Optionally, the indication information indicates whether the multiplexing transmission is allowed (or exists), or the indication information indicates information for determining a reference bit quantity *m* of UCI having a low priority and transmitted simultaneously with UCI which has a high priority and is carried by the uplink channel on a same uplink channel, wherein the reference bit quantity *m* is used for determining whether the multiplexing transmission of the uplink channels having different priorities is allowed.

Further, Optionally, when it is determined, in accordance with the indication information, that the reference bit quantity *m* is 0, it is determined the multiplexing transmission of the uplink channels is not allowed, and when it is determined, in accordance with the indication information, that the reference bit quantity *m* is greater than 0, it is determined the uplink channels having different priorities are allowed to be multiplexed for transmission.

When the indication information is used for indicating whether the multiplexing transmission is allowed, specifically, the indicated status may be one of "allowed" and "not allowed", or the indicated status may be one of "exist" or "not exist", or the indicated status may be one of "supported" or "not supported". For example, a PDCCH scheduling a PDSCH, or a PDCCH indicating SPS PDSCH activation, or a PDCCH requiring an HARQ-ACK feedback (e.g., a PDCCH indicating SPS PDSCH resource release, a PDCCH indicating secondary cell (SCell) dormancy, or the like) has an indication field for indicating whether UCI having a priority different from that of the HARQ-ACK corresponding to the PDCCH (i.e., an HARQ-ACK for the PDSCH scheduled or activated by the PDCCH, or a HARQ-ACK for the PDCCH itself) is allowed to be transmitted simultaneously with the HARQ-ACK on a same uplink channel (PUCCH or PUSCH). For another example, a PDCCH scheduling a PUSCH or a PDCCH indicating CG PUSCH activation has an indication field for indicating whether UCI having a priority different from that of the PUSCH is allowed to be transmitted on the PUSCH.

An example of the indication information that indicates the information for determining the reference bit quantity *m* of the UCI having a low priority which is transmitted simultaneously with the UCI having a high priority on a same uplink channel, wherein the UCI having the low priority and the UCI having the high priority are UCIs carried on the overlapped uplink channels respectively, is: a PDCCH scheduling a PDSCH, or a PDCCH indicating SPS PDSCH activation, or a PDCCH requiring an HARQ-ACK feedback (e.g., a PDCCH indicating SPS PDSCH resource release, or a PDCCH indicating SCell dormancy, or the like) has an indication field, which indicates indication information for determining the bit quantity of UCI having a priority different from that of an HARQ-ACK corresponding to the PDCCH and transmitted simultaneously with the HARQ-ACK on a same channel. When the reference bit quantity *m* determined in accordance with the indication information is 0, a determination result is that the multiplexing transmission is not allowed, and when the reference bit quantity *m* determined in accordance with the indication information is greater than 0, the determination result is that the multiplexing transmission is allowed. For another example, a PDCCH scheduling a PUSCH or a PDCCH indicating CG PUSCH activation has an indication field, which indicates indication information for determining the bit quantity or resource (which may be determined in accordance with an indicated beta-offset) of UCI having a priority different from that of the PUSCH and transmitted on the PUSCH. When the reference bit quantity *m* or resource determined in accordance with the indication information is 0, the determination result is that the multiplexing transmission is not allowed, and when the reference bit quantity *m* or resource determined in accordance with the indication information is greater than 0, the determination result is that the multiplexing transmission is allowed.

When DCI (i.e., PDCCH) has an indication field indicating whether the multiplexing of a low priority (LP) and a high priority (HP) (i.e., the multiplexing transmission of an uplink channel having the low priority and an uplink channel having the high priority) is allowed or exists, if the indication field indicates that the multiplexing exists, the multiplexed uplink channels need to always meet the timeline for multiplexing, and if the indication field indicates that the multiplexing does not exist, the multiplexed uplink channels does not need to meet the timeline for multiplexing.

Optionally, the determining whether the multiplexing transmission of the uplink channels having different priorities is allowed includes: determining, in accordance with a bit quantity of UCI having a high priority and carried by the uplink channel or a bit range corresponding to the bit quantity, a reference bit quantity n of UCI having a low priority and transmitted simultaneously with the UCI having the high priority on a same uplink channel, wherein each bit quantity of UCI having the high priority or each bit range corresponding to the bit quantity corresponds to the reference bit quantity n of UCI having the low priority; and determining, in accordance with the reference bit quantity n, whether the multiplexing transmission of the uplink channels having different priorities is allowed.

For example, when the reference bit quantity n is 0, it is determined that the multiplexing transmission of the uplink channels is not allowed, and when the reference bit quantity n is greater than 0, it is determined that the multiplexing transmission of the uplink channels is allowed.

The bit range corresponding to the bit quantity of the UCI having the high priority refers to a numerical range of the bit quantity of the UCI having the high priority.

To be specific, a correspondence between the bit quantity of the UCI having a high priority or the bit range corresponding to the bit quantity and the reference bit quantity *n* of the UCI having a low priority may be predefined or configured. If the uplink channels having different priorities overlap in the time domain, then the reference bit quantity n of the UCI having the low priority that can be transmitted simultaneously with the UCI corresponding to the uplink channel having a high priority on a same channel is determined in accordance with the bit quantity of the UCI corresponding to the uplink channel having a high priority among the overlapping uplink channels and the correspondence.

When the reference bit quantity n for the low priority (LP) (i.e., the reference bit quantity *n* of the UCI having the low priority) is determined in accordance with the bit quantity for the high priority (HP) or the bit range corresponding to the bit quantity (i.e., the bit quantity of the UCI having the high priority or the bit range corresponding to the bit quantity), if the determined reference bit quantity *n* is greater than 0 or there is the low priority (LP), then the uplink channels always need to meet the timeline for multiplexing, while if the determined reference bit quantity *n* is 0 or there is no corresponding low priority (LP), the uplink channels do not need to meet the timeline for multiplexing.

Optionally, the communication device is a base station, and the channel multiplexing method further includes: in case that it is determined that the uplink channels do not need to meet the predetermined timeline, omitting a step of ensuring that the uplink channels meet the predetermined timeline when scheduling or configuring the uplink channels.

In embodiments of the present disclosure, if it is determined that the uplink channels having different priorities are not allowed to be multiplexed for transmission, then it is determined that the uplink channels having different priorities and overlapping with each other in the time domain do not need to meet the timeline. As a result, when the uplink channels are scheduled or configured by the base station, it is unnecessary for the base station to ensure that these uplink channels having different priorities and overlapping with each other in the time domain meet the timeline.

Optionally, the communication device is a terminal, and the channel multiplexing method further includes: in case that it is determined that the uplink channels do not need to meet the predetermined timeline, omitting a step of checking, prior to the multiplexing transmission, whether the uplink channel meets the predetermined timeline.

In embodiments of the present disclosure, if it is determined that the uplink channels having different priorities are not allowed to be multiplexed for transmission, then it is determined that the uplink channels having different priorities and overlapping with each other in the time domain do not need to meet the timeline. As a result, it is unnecessary for the terminal to check whether these uplink channels having different priorities and overlapping with each other in the time domain meet the timeline.

Of course, if it is determined that the uplink channels do not need to meet the timeline, the terminal may also check, prior to the multiplexing transmission, whether these uplink channels meet the timeline. However, even if the check result shows that the uplink channels do not meet the timeline, the terminal will not consider it as a scheduling error, and instead, the terminal does not perform the multiplexing transmission, i.e., the terminal transmits the uplink channel having a high priority among the uplink channels overlapping with each other and does not transmit (i.e., discards) the uplink channel having a low priority.

Optionally, the communication device is a base station, and the channel multiplexing method further includes: in case that it is determined that the uplink channels need to meet the predetermined timeline, ensuring that the uplink channels meet the predetermined timeline when scheduling or configuring the uplink channels.

In embodiments of the present disclosure, if it is determined that the uplink channels having different priorities are allowed to be multiplexed for transmission, then it is determined that the uplink channels having different priorities and overlapping with each other in the time domain need to meet the timeline. As a result, when the uplink channels are scheduled or configured by the base station, it is necessary for the base station to ensure that these uplink channels having different priorities and overlapping with each other in the time domain meet the timeline.

Optionally, the communication device is a terminal, and the channel multiplexing method further includes: in case that it is determined that the uplink channels need to meet the predetermined timeline, checking, prior to the multiplexing transmission, whether the uplink channel meets the predetermined timeline.

In embodiments of the present disclosure, if it is determined that the uplink channels having different priorities are allowed to be multiplexed for transmission, then it is determined that the uplink channels having different priorities and overlapping with each other in the time domain need to meet the timeline. As a result, it is necessary for the terminal to check, prior to the multiplexing transmission, whether these uplink channels having different priorities and overlapping with each other in the time domain meet the timeline. If the check result shows that the uplink channels do not meet the timeline, the terminal considers it as a scheduling error, and a terminal behavior at this time is not specified yet, and the terminal may refuse to transmit all the uplink channels overlapping with each other, may randomly select one of the uplink channels for transmission, or the like. The multiplexing transmission of the uplink channels having different priorities is performed only if the check result shows that the uplink channels meet the timeline.

In embodiments of the present disclosure, the timeline may be a timeline defined in the related art that needs to be met when a plurality of PUCCH overlaps with each other in the time domain or a PUCCH overlaps with a PUSCH in the time domain. A definition of the timeline is: when a PUCCH or a PUSCH has a corresponding PDCCH, e.g., if an HARQ-ACK carried by the PUCCH is an HARQ-ACK for a PDSCH scheduled by a PDCCH or an HARQ-ACK for a PDCCH indicating downlink SPS resource release, then the PDCCH scheduling the PDSCH or the PDCCH indicating the downlink SPS resource release is the PDCCH corresponding to the PUCCH, which may also be referred to as a PDCCH scheduling the PUCCH, and the PDCCH scheduling the PUSCH is the PDCCH corresponding to the PUSCH; the first symbol of a channel with an earliest initiation time among the overlapping PUCCH and PUSCH is taken as a target symbol; if there are a plurality of channels with the same initiation time, one channel is selected randomly among the plurality of channels, and the first symbol of the channel is taken as the target symbol; the multiplexing transmission is performed only if the target symbol meets the following timelines, otherwise it is determined that a scheduling error occurs.

Timeline1: the target symbol is not earlier than the first symbol (including a cyclic prefix (CP)) located after a time duration of T1mux immediately following the last symbol of any one PDSCH or SPS PDSCH release for which the HARQ-ACK feedback on the PUCCH is required, in other words, a time interval between the target symbol and the last symbol of any one of aforementioned PDSCH or SPS PDSCH release is not less than T1mux. T1mux is associated with a processing latency of the PDSCH, and may be calculated in accordance with a predetermined formula and relevant parameters. This timeline aims to ensure that HARQ-ACK can be obtained and prepared before the start of transmission of the finally-determined channel for transmitting the HARQ-ACK.

Timeline2: the target symbol is not earlier than the first symbol (including a CP) located after a time duration of T2mux immediately following the last symbol of any one PDCCH scheduling the PDSCH (if exists) and a PUSCH (if exists) (including a PDCCH indicating the SPS PDSCH release), in other words, a time interval between the target symbol and the last symbol of any one of aforementioned PDCCH is not less than T2mux. T2mux is associated with a processing latency of the PUSCH, and may be calculated in accordance with a predetermined formula and relevant parameter. This timeline aims to ensure that, when UCI needs to be transferred to the PUSCH for transmission, the PDCCH scheduling the PUSCH can be obtained before the preparation of the PUCCH starts, so that it is determined that it is unnecessary to prepare for the UCI transmission on the PUCCH, and the preparation for transmission including the UCI can be completed, i.e., the obtaining and multiplexing processing of the UCI are completed and the preparation of TB (such as coding, modulation and scrambling) is completed, before transmission of the PUSCH. If multiple PUCCHs are multiplexed, T2mux is used for simulating a preparation time for multiplexing CSI and SR with HARQ-ACK.

If HARQ-ACK carried by the PUCCH does not correspond to a PDCCH (i.e., the HARQ-ACK is an HARQ-ACK for an SPS PDSCH), there is no PDCCH scheduling the PDSCH. If there is no PUSCH or PUSCH does not correspond to a PDCCH, it is only necessary to check T1mux and it is unnecessary to check T2mux. If CSI and/or SR is carried by the PUCCH, it is unnecessary to check T1mux because there is no corresponding PDSCH; further, if there is no PUSCH or PUSCH does not correspond to a PDCCH, it is also unnecessary to check T2mux.

When PUCCHs overlap, if at least one PUCCH is transmitted in repetition (i.e., UCI is transmitted repeatedly in each slot of a plurality of slots), then for the overlapped repetition, the PUCCH having a high priority is transmitted and the PUCCH having a low priority is discarded, while the repetition for which no overlapping occurs is not impacted. If PUCCH overlaps with PUSCH transmitted in repetition, when the PUSCH is transmitted in slot-based repetition (R15 repetition, or R16 repetition type A), the UCI carried by the PUCCH is transferred to one or more PUSCH slots overlapping with the PUCCH for transmission. When the PUSCH adopts R16 repetition type B, the UCI carried by the PUCCH is transferred to one earliest actual repetition PUSCH overlapping with the PUCCH and including more than one symbol (the actual repetition PUSCH is a repetition PUSCH resulting from a segmentation in accordance with unavailable symbol, DL symbol, slot boundary and the like). The one or more repetitions of PUSCH that overlap with the PUCCH all need to meet the timeline for multiplexing. If a multi-slot PUCCH overlaps with a single-slot or multi-slot PUSCH, the PUSCH overlapping with the PUCCH is discarded, so as to ensure that the repeated transmission of the PUCCH is not interrupted.

In addition, the predetermined timeline may also be a timeline newly defined for the multiplexing transmission of PUCCH and/or PUSCH having different priorities and overlapping with each other in the time domain. For example, whether all DCI and PDSCHs meet T1mux, T2mux and the like is determined based on a start point of the uplink channel having a high priority.

The channel multiplexing method will be illustratively described hereinafter.

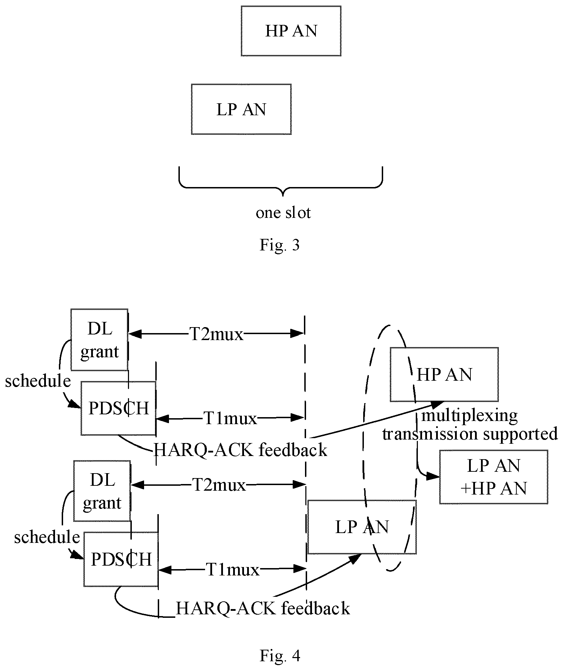

Fig. 3 shows a situation where PUCCHs having different priorities overlap, where LP denotes a low priority, HP denotes a high priority, and AN is an abbreviation of HARQ-ACK.

As an implementation mode of the channel multiplexing, a DL grant (i.e., PDCCH) scheduling a PDSCH corresponding to an HP AN may include an indication field for indicating whether multiplexing transmission of the HP AN and an LP AN on a same channel is supported. Upon reception of the DL grant corresponding to the HP AN, UE parses the DL grant to obtain the indication field, and then the UE may determine, in accordance with the indication field, whether the multiplexing transmission of the HP AN and the LP AN on a same channel is supported.

To be specific, if the indication field indicates that the multiplexing transmission is supported (e.g., the indicated status may be "supported", or may indicate information for determining a bit quantity of the LP AN multiplexed with the HP AN, and it is determined the bit quantity is greater than 0, which proves that the LP AN exists and the multiplexing transmission of the HP AN and the LP AN is allowed), prior to transmitting the LP AN and the LP AN overlapping with each other on a same uplink channel in accordance with a predefined multiplexing transmission rule, the UE needs to determine: 1) whether time intervals between the first symbol of a PUCCH with an earliest initiation symbol (i.e., LP AN PUCCH in Fig. 3) among a PUCCH carrying the HP AN and a PUCCH carrying the LP AN that overlap and DL grants corresponding to the HP AN and LP AN respectively are all greater than or equal to T2mux required for the multiplexing transmission (T2mux may be calculated in accordance with relevant formula and parameters, as defined in the related art); 2) whether time intervals between the first symbol of a PUCCH with an earliest initiation symbol among a PUCCH carrying the HP AN and a PUCCH carrying the LP AN that overlap and PDSCHs corresponding to the HP AN and LP AN respectively are all greater than or equal to T1mux required for the multiplexing transmission (T1mux may be calculated in accordance with relevant formula and parameters, as defined in the related art). When both the above-mentioned timelines are met, it is determined that the multiplexing transmission may be performed. In accordance with the multiplexing transmission rule, one PUCCH resource is determined for transmitting the HP AN and the LP AN simultaneously, as shown in Fig. 4.

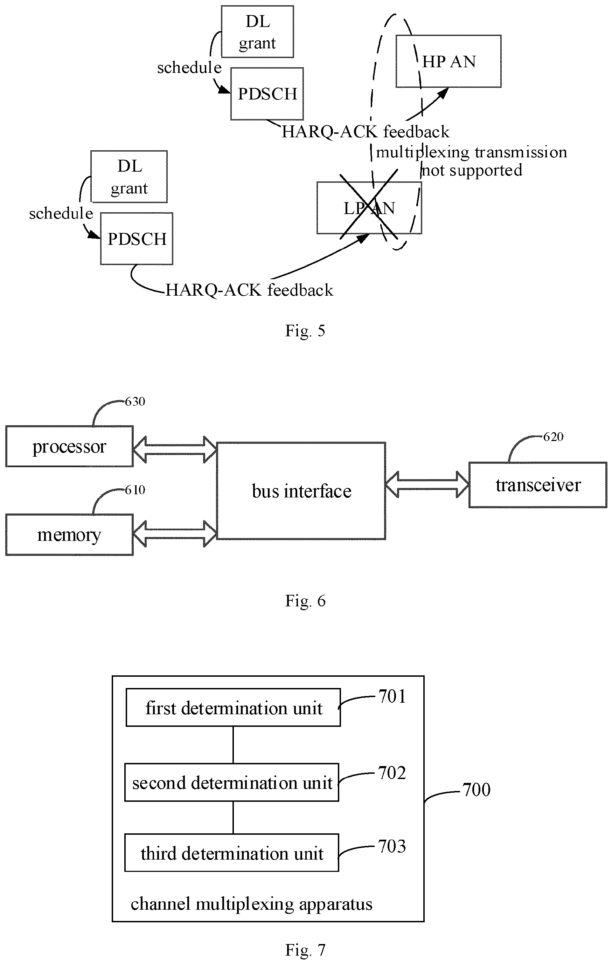

If the indication field indicates that the multiplexing transmission is not supported (e.g., the indicated status may be "not supported", or may indicate information for determining a bit quantity of the LP AN multiplexed with the HP AN, and it is determined the bit quantity is 0, which proves that the LP AN does not exist or the multiplexing transmission of the HP AN and the LP AN is not allowed), the UE no longer needs to determine whether the time interval between the PUCCH and the DL grant meets T2mux and whether the time interval between the PUCCH and the PDSCH meets T1mux in case that the UE determines, in accordance with the DL grant corresponding to the HP AN, that the multiplexing transmission of the HP AN and LP AN is not supported, because it is unnecessary to transmit the HP AN and the LP AN on a same uplink channel and an overlapping portion between the LP AN PUCCH and the HP AN PUCCH needs to be discarded. The UE may directly transmit the HP AN using a PUCCH resource corresponding to the HP AN, and discards the LP AN overlapping with the HP AN, so as to prevent the transmission of the HP AN from being adversely affected, as shown in Fig. 5. During the scheduling at a base station side, it is also unnecessary to ensure that the time interval between a start point of the LP AN PUCCH and the DL grant corresponding to the HP AN meets T2mux and the time interval between the start point of the LP AN PUCCH and the PDSCH corresponding to the HP AN meets T1mux. In other words, when HP data is scheduled by the base station, it is unnecessary for the base station to transmit the DL grant and the PDSCH corresponding the HP AN early; rather, the DL grant and the PDSCH may be scheduled and transmitted in accordance with the practical need when the HP data has arrived and the PDSCH needs to be transmitted. In this way, not only it is able to ensure the normal transmission of the HP AN corresponding to the HP data, but also the requirement of scheduling and transmitting the HP data before a specific position can be eliminated, so that it is able to reduce the limitation and influence on the scheduling and transmission of the HP data, and ensure that the HP data can be transmitted immediately upon arrival.

As another implementation mode of the channel multiplexing, the bit quantity of the LP AN that can be multiplexed with the HP AN is determined in accordance with the bit quantity of the HP AN as well as a predefined or configured correspondence between the bit quantity or bit quantity range of the HP AN and the reference bit quantity of the LP AN. To be specific, if the bit quantity of the LP AN to be multiplexed with the HP AN is determined to be greater than 0 in accordance with the correspondence and the bit quantity of the current HP AN, i.e., the LP AN exists and the multiplexing transmission of the LP AN and the HP AN is allowed, a specific process is same as that of the above-mentioned situation where it is determined the multiplexing transmission is supported and Fig. 4, a repeated description thereof is omitted herein. If the bit quantity of the LP AN to be multiplexed with the HP AN is determined to be 0 in accordance with the correspondence and the bit quantity of the current HP AN, i.e., the LP AN does not exist or the multiplexing transmission of the LP AN and the HP AN is not allowed, a specific process is same as that of the above-mentioned situation where it is determined the multiplexing transmission is not supported and Fig. 5, a repeated description thereof is omitted herein.

In the above embodiments, if the HARQ-ACKs having different priorities are replaced with unicast and multicast HARQ-ACKs or replaced with other two different types of UCI transmissions, the method is also applicable. If one of the PUCCHs carrying UCI is replaced with a PUSCH, i.e., the PUCCH carrying the LP AN overlaps with the PUSCH carrying the HP AN, or the PUCCH carrying the HP AN overlaps with the PUSCH carrying the LP AN, a processing mode is similar, and a difference merely lies in that the PUSCH corresponds to one UL grant only and there is no PDSCH or DL grant.

It should be appreciated that, when it is determined that the multiplexing transmission of the LP AN and the HP AN is not supported (or the LP AN does not exist, or the multiplexing transmission is not allowed) or it is determined that the bit quantity of the LP AN to be multiplexed with the HP AN is 0, an actual situation may not necessarily be that the PUCCH/PUSCH carrying the LP AN does not overlap with the PUCCH/PUSCH carrying the HP AN during the scheduling and transmission, but rather, the overlapped transmission does occur; however it is determined that the multiplexing transmission is not supported in accordance with a configuration or decision. Hence, the channel having a low priority needs to be discarded, and it is unnecessary to require the channel having a high priority to meet the timeline.

Fig. 6 is a schematic structural diagram of a communication device according to another embodiment of the present disclosure. The communication device includes a memory 610, a transceiver 620 and a processor 630. The memory 610 is configured to store therein a computer program. The transceiver 620 is configured to transmit and receive data under the control of the processor. The processor 630 is configured to read the computer program in the memory 610 and implement: determining whether uplink channels having different priorities are allowed to be multiplexed for transmission in case that the uplink channels overlap in a time domain; determining that the uplink channels need to meet a predetermined timeline in case that it is determined that the multiplexing transmission of the uplink channels is allowed; and determining that the uplink channels do not need to meet the predetermined timeline in case that it is determined that the multiplexing transmission of the uplink channels is not allowed.

The transceiver 620 is configured to transmit and receive data under the control of the processor 630.

In Fig. 6, the bus architecture may include any number of interconnected buses and bridges, and connects various circuits such as one or more processors represented by the processor 630 and the memory represented by the memory 610 together. The bus architecture can also link together various other circuits such as peripherals, voltage regulators, and power management circuits, etc., which are well known in the art and therefore will not be further described herein. The bus interface provides the interface. Transceiver 620 may be a plurality of elements, i.e., including a transmitter and a receiver, which provides units for communicating with various other devices over transmission media, these transmission media include wireless channel, wired channel, fiber optic cable, and other transmission media.

The processor 630 is responsible for managing the bus architecture and general processing, and the memory 610 can store data used by the processor 630 when performing operations.

Optionally, the processor 630 may be a central processing unit (CPU), application specific integrated circuit (ASIC), field-programmable gate array (FPGA) or complex programmable logic device (CPLD), and the processor can also adopt a multi-core architecture.

The processor is used for performing any one of the methods provided in the embodiments of the present disclosure according to the obtained executable instructions by calling the computer program stored in the memory. The processor and memory may also be physically arranged separately.

Embodiments of the present disclosure provide a multiplexing transmission scheme for the case that a collision occurs between uplink channels having different priorities, in which whether the uplink channels need to meet the predetermined timeline is determined in accordance with a determination result as to whether multiplexing transmission of UCIs having different priorities is supported. When it is determined that multiplexing transmission of UCIs having different priorities is not supported or performed, it is unnecessary to determine whether the channels overlapping with each other meet the timeline. As a result, the scheduling of an uplink channel having a high priority is not limited, so it is able to improve the transmission flexibility of the uplink channel having the high priority, and ensure that a transmission latency meets the requirement.

Optionally, the determining whether the multiplexing transmission of the uplink channels having different priorities is allowed includes: determining, in accordance with configuration signaling, whether the multiplexing transmission of the uplink channels having different priorities is allowed, wherein the configuration signaling includes at least one of: DCI in a downlink control channel corresponding to the uplink channel, wherein the DCI carries indication information; or high-layer signaling.

Optionally, the indication information indicates whether the multiplexing transmission of the uplink channels is allowed, or the indication information indicates information for determining a reference bit quantity *m* of UCI having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

Optionally, the determining whether the multiplexing transmission of the uplink channels having different priorities is allowed includes: determining, in accordance with a bit quantity of UCI having a high priority and carried by the uplink channel or a bit range corresponding to the bit quantity, a reference bit quantity n of UCI having a low priority and transmitted simultaneously with the UCI having the high priority on a same uplink channel, wherein each bit quantity of UCI having the high priority or each bit range corresponding to the bit quantity corresponds to the reference bit quantity n of UCI having the low priority; and determining, in accordance with the reference bit quantity n, whether the multiplexing transmission of the uplink channels having different priorities is allowed.

Optionally, the communication device is a base station, and the processor is further configured to implement: in case that it is determined that the uplink channels do not need to meet the predetermined timeline, omitting a step of ensuring that the uplink channels meet the predetermined timeline when scheduling or configuring the uplink channels.

Optionally, the communication device is a base station, and the processor is further configured to implement: in case that it is determined that the uplink channels need to meet the predetermined timeline, ensuring that the uplink channels meet the predetermined timeline when scheduling or configuring the uplink channels.

Optionally, the communication device is a terminal, and the processor is further configured to implement: in case that it is determined that the uplink channels need to meet the predetermined timeline, checking, prior to the multiplexing transmission, whether the uplink channels meet the predetermined timeline.

Optionally, the communication device is a terminal, and the processor is further configured to implement: in case that it is determined that the uplink channels do not need to meet the predetermined timeline, omitting a step of checking, prior to the multiplexing transmission, whether the uplink channels meet the predetermined timeline.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiments will not be described in detail here.

Fig. 7 is a schematic structural diagram of a channel multiplexing apparatus according to an embodiment of the present disclosure. The channel multiplexing apparatus 700 includes: a first determination unit 701, configured to determine whether uplink channels having different priorities are allowed to be multiplexed for transmission in case that the uplink channels overlap in a time domain; a second determination unit 702, configured to determine that the uplink channels need to meet a predetermined timeline in case that it is determined that the multiplexing transmission of the uplink channels is allowed; and a third determination unit 703, configured to determine that the uplink channels do not need to meet the predetermined timeline in case that it is determined that the multiplexing transmission of the uplink channels is not allowed.

Embodiments of the present disclosure provide a multiplexing transmission scheme for the case that a collision occurs between uplink channels having different priorities, in which whether the uplink channels need to meet the predetermined timeline is determined in accordance with a determination result as to whether multiplexing transmission of UCIs having different priorities is supported. When it is determined that multiplexing transmission of UCIs having different priorities is not supported or performed, it is unnecessary to determine whether the channels overlapping with each other meet the timeline. As a result, the scheduling of an uplink channel having a high priority is not limited, so it is able to improve the transmission flexibility of the uplink channel having the high priority, and ensure that a transmission latency meets the requirement.

Optionally, the first determination unit 701 is further configured to determine, in accordance with configuration signaling, whether the multiplexing transmission of the uplink channels having different priorities is allowed, wherein the configuration signaling includes at least one of: DCI in a downlink control channel corresponding to the uplink channel, wherein the DCI carries indication information; or high-layer signaling.

Optionally, the indication information indicates whether the multiplexing transmission of the uplink channels is allowed, or the indication information indicates information for determining a reference bit quantity *m* of UCI having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

Optionally, the first determination unit 701 includes: a reference bit quantity determination unit, configured to determine, in accordance with a bit quantity of UCI having a high priority and carried by the uplink channel or a bit range corresponding to the bit quantity, a reference bit quantity n of UCI having a low priority and transmitted simultaneously with the UCI having the high priority on a same uplink channel, wherein each bit quantity of UCI having the high priority or each bit range corresponding to the bit quantity corresponds to the reference bit quantity *n* of UCI having the low priority; and a multiplexing transmission determination unit, configured to determine, in accordance with the reference bit quantity *n,* whether the multiplexing transmission of the uplink channels having different priorities is allowed.

Optionally, the channel multiplexing apparatus 700 is applied in a base station, and further includes: a first scheduling and configuration unit, configured to, in case that it is determined that the uplink channels do not need to meet the predetermined timeline, omit a step of ensuring that the uplink channels meet the predetermined timeline when scheduling or configuring the uplink channels.

Optionally, the channel multiplexing apparatus 700 is applied in a base station, and further includes: a second scheduling and configuration unit, configured to, in case that it is determined that the uplink channels need to meet the predetermined timeline, ensuring that the uplink channels meet the predetermined timeline when scheduling or configuring the uplink channels.

Optionally, the channel multiplexing apparatus 700 is applied in a terminal, and further includes: a first checking unit, configured to, in case that it is determined that the uplink channels need to meet the predetermined timeline, check, prior to the multiplexing transmission, whether the uplink channels meet the predetermined timeline.

Optionally, the channel multiplexing apparatus 700 is applied in a terminal, and further includes: a second checking unit, configured to, in case that it is determined that the uplink channels do not need to meet the predetermined timeline, omit a step of checking, prior to the multiplexing transmission, whether the uplink channels meet the predetermined timeline.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiments will not be described in detail here.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiments will not be described in detail here.

The present disclosure further provides in some embodiments a readable storage medium storing therein a program. The program is configured to be executed by a processor, to implement the steps of any of the embodiments of the above-mentioned channel multiplexing method. For a detailed description thereof, references may be made to the description of the method steps of the corresponding embodiments.

The readable storage medium may be any available medium or data storage device capable of being accessed by a processor, which includes, but not limited to, a magnetic storage (e.g., floppy disk, hard disk, magnetic tape, or magneto-optical disk (MO)), an optical storage (e.g., compact disc (CD), digital video disc (DVD), blue-ray disc (BD), or high-definition versatile disc (HVD)), or a semiconductor storage (e.g., ROM, electrically programmable ROM (EPROM), electrically erasable PROM (EEPROM), NAND flash, or solid-state disk (SSD)).

Schemes in the embodiments of the present disclosure may be applied to various systems, especially a 5G system, e.g., global system of mobile communication (GSM), code division multiple access (CDMA) system, wideband code division multiple access (WCDMA) system, general packet radio service (GPRS) system, Long Term Evolution (LTE) system, LTE frequency division duplexing (FDD) system, LTE time division duplexing (TDD) system, Long Term Evolution advanced (LTE-A) system, universal mobile telecommunication system (UMTS), worldwide interoperability for microwave access (WiMAX) system, or 5^{th}-Generation (5G) New Radio (NR) system, or the like. Each of these systems includes a terminal and a base station. Each system may further include a core network part, e.g., an evolved packet system (EPS), 5G system (5GS) or the like.

The terminal involved in the embodiments of the present disclosure may refer to a device providing voice and/or data connectivity to a user, a handheld device having a wireless connection function, any other processing device c connected to a wireless modem, or the like. In different systems, the terminal may have different names. For example, in a 5G system, the terminal is referred to as user equipment (UE). A wireless terminal may communicate with one or more core networks (CNs) via a radio access network (RAN). The wireless terminal may be a mobile terminal device, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a personal communication service (PCS) telephone, a cordless telephone, a session initiation protocol (SIP) phone, a wireless local loop (WLL) station, a personal digital assistant (PDA) or the like. The wireless terminal may also be referred to as system, subscriber unit, subscriber station, mobile station, mobile, remote station, access point, remote terminal, access terminal, user terminal, user agent or user device, which is not particularly limited herein.

The base station involved in the embodiments of the present disclosure may include a plurality of cells providing services for terminals. Depending on different application scenarios, the base station may be referred to as an access point, a device in an access network that is in communication with the wireless terminal device through one or more sectors over an air interface, or other name. The base station may be used to exchange a received air frame with an Internet protocol (IP) packet, and serves as a router between the wireless terminal device and other part of the access network. The other part of the access network may include an IP communication network. The base station may further coordinate attribute management of the air interface. For example, the base station involved in the embodiments of the present disclosure may be a base transceiver station (BTS) in the GSM or CDMA system, a NodeB in the WCDMA system, an evolved Node B (eNB or e-NodeB) in the LTE system, a 5G base station (gNB) in 5G network architecture (next generation system), a home evolved Node B (HeNB), a relay node, a femto, a pico, or the like, which is not particularly limited herein. In some network structures, the base station may include a centralized unit (CU) and a distributed unit (DU), which may be geographically separated from each other.

Multi input multi output (MIMO) transmission may be performed between the base station and the terminal each using one or more antennae, and the MIMO transmission may be single user MIMO (SU-MIMO) or multiple user MIMO (MU-MIMO). Depending on the form of an antenna combination and the quantity of antennae, the MIMO transmission may be 2 dimension MIMO (2D-MIMO), 3 dimension MIMO (3D-MIMO), full dimension MIMO (FD-MIMO) or massive-MIMO, and it may also be diversity transmission, precoding transmission or beam-forming transmission.

For a person skilled in the art, the embodiments of the present disclosure may be provided as methods, systems, or computer program products. Accordingly, the present disclosure may take the form of an entirely hardware embodiment, an entirely software embodiment or an embodiment combining software and hardware. The present disclosure may take the form of a computer program product implemented on one or more computer-usable storage media (including, but not limited to, a magnetic disk storage, optical storage and the like) including computer-usable program codes.

The present disclosure is described with reference to flow charts and/or block diagrams of methods, devices (systems), and computer program products in accordance with the embodiments of the present disclosure. It should be understood that, each process and/or block of the flow charts and/or block diagrams, and combinations of processes and/or blocks in the flow charts and/or block diagrams, may be implemented by computer executable instructions. The computer executable instructions may be provided to a processor of a general purpose computer, a special purpose computer, an embedded processor, or other programmable data processing device to produce a machine, such that the instructions executed by the processor of the computer or other programmable data processing device create a means for implementing the functions specified in one or more processes of the flow charts and/or one or more blocks of the block diagrams.

The processor executable instructions may also be stored in a processor-readable storage that can direct a computer or other programmable data processing device to function in a particular manner, such that the instructions stored in the processor-readable storage produce an article of manufacture including instruction means which implement the functions specified in one or more processes of the flow charts and/or one or more blocks of the block diagrams.

The processor executable instructions may also be loaded onto a computer or other programmable data processing device to cause a series of operational steps to be performed on the computer or other programmable device, to produce a computer implemented process, such that the instructions executed on the computer or other programmable device provide steps for implementing the functions specified in one or more processes of the flow charts and/or one or more blocks of the block diagrams.

It should be further appreciated that, the above modules are divided merely on the basis of their logic functions, and in actual use, they may be completely or partially integrated into one physical entity, or physically separated from each other. These modules may be implemented completely by software invoked by a processing element, or implemented completely in the form of hardware, or some modules are implemented by software invoked by a processing element and some modules are implemented in the form of hardware. For example, a certain module may be a standalone processing element, or integrated into a chip of the above-mentioned device. In addition, the module may be stored in the memory of the above-mentioned device in the form of program codes, and may be called and executed by a processing element of the above-mentioned device so as to achieve the above functions of the modules. The other modules may be implemented in a similar manner. In addition, all or parts of the modules may be integrated together or implemented separately. Here, the processing element may be an integrated circuit (IC) having a signal processing capability. During the implementation, the steps of the method or the modules may be implemented by an integrated logic circuit of the processing element in the form of hardware or by instructions in the form of software.

For example, the above modules, units, sub-units or sub-modules may be one or more ICs configured to implement the above-mentioned method, e.g., one or more application specific integrated circuits (ASICs), one or more digital signal processors (DSPs), or one or more field programmable gate arrays (FPGAs). For another example, when a certain module is implemented by a program code called by a processing element, the processing element may be a general-purpose processor, e.g., a central processing unit (CPU) or other processor capable of calling the program code. For still another example, these modules may be integrated together and implemented in the form of system-on-a-chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment. In addition, the expression "and/or" in the specification and the claims is merely used to represent at least one of connected objects. For example, "A and/or B and/or C" denotes seven situations, i.e., there is only A, there is only B, there is only C, there are both A and B, there are both B and C, there are both A and C, and there are A, B and C. Similarly, the phrase "at least one of A or B" in the specification and the claims shall be understood as "there is only A, there is only B, or there are both A and B".

Obviously, those skilled in the art can make various changes and modifications to the present disclosure without departing from the spirit and scope of the present disclosure. In this way, if these changes and modifications of the present disclosure fall within the scope of the claims of the present disclosure and their equivalents, the present disclosure is also intended to include these changes and modifications.

## Claims

1. A channel multiplexing method, performed by a communication device, comprising:
determining whether multiplexing transmission of uplink channels having different priorities is allowed in case that the uplink channels overlap in a time domain;
determining that the uplink channels need to meet a predetermined timeline in case that it is determined that the multiplexing transmission of the uplink channels is allowed; and
determining that the uplink channels do not need to meet the predetermined timeline in case that it is determined that the multiplexing transmission of the uplink channels is not allowed.

2. The channel multiplexing method according to claim 1, wherein the determining whether the multiplexing transmission of the uplink channels having different priorities is allowed comprises:
determining, in accordance with configuration signaling, whether the multiplexing transmission of the uplink channels is allowed,
wherein the configuration signaling comprises at least one of:
downlink control information (DCI) in a downlink control channel corresponding to the uplink channel, wherein the DCI carries indication information; or
high-layer signaling.

3. The channel multiplexing method according to claim 2, wherein the indication information indicates whether the multiplexing transmission of the uplink channels is allowed, or
the indication information indicates information for determining a reference bit quantity *m* of uplink control information (UCI) having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

4. The channel multiplexing method according to claim 1, wherein the determining whether the multiplexing transmission of the uplink channels having different priorities is allowed comprises:
determining a reference bit quantity n of UCI having a low priority which is transmitted simultaneously with UCI having a high priority on a same uplink channel in accordance with a bit quantity of the UCI having the high priority or a bit range corresponding to the bit quantity, wherein each bit quantity of UCI having the high priority or each bit range corresponding to the bit quantity corresponds to the reference bit quantity n of UCI having the low priority, wherein the UCI having the low priority and the UCI having the high priority are UCIs carried on the overlapped uplink channels respectively; and
determining, in accordance with the reference bit quantity *n,* whether the multiplexing transmission of the uplink channels having different priorities is allowed.

5. The channel multiplexing method according to claim 1, wherein the communication device is a base station, and the channel multiplexing method further comprises:
in case that it is determined that the uplink channels do not need to meet the predetermined timeline, omitting a step of ensuring that the uplink channels meet the predetermined timeline when scheduling or configuring the uplink channels.

6. The channel multiplexing method according to claim 1, wherein the communication device is a base station, and the channel multiplexing method further comprises:
in case that it is determined that the uplink channels need to meet the predetermined timeline, ensuring that the uplink channels meet the predetermined timeline when scheduling or configuring the uplink channels.

7. The channel multiplexing method according to claim 1, wherein the communication device is a terminal, and the channel multiplexing method further comprises:
in case that it is determined that the uplink channels need to meet the predetermined timeline, checking, prior to the multiplexing transmission, whether the uplink channels meet the predetermined timeline.

8. The channel multiplexing method according to claim 1, wherein the communication device is a terminal, and the channel multiplexing method further comprises:
in case that it is determined that the uplink channels do not need to meet the predetermined timeline, omitting a step of checking, prior to the multiplexing transmission, whether the uplink channels meet the predetermined timeline.

9. A communication device, comprising a memory, a transceiver and a processor,
wherein the memory is configured to store therein a computer program, the transceiver is configured to transmit and receive data under the control of the processor, and the processor is configured to read the computer program in the memory and implement:
determining whether uplink channels having different priorities are allowed to be multiplexed for transmission in case that the uplink channels overlap in a time domain;
determining that the uplink channels need to meet a predetermined timeline in case that it is determined that the multiplexing transmission of the uplink channels is allowed; and
determining that the uplink channels do not need to meet the predetermined timeline in case that it is determined that the multiplexing transmission of the uplink channels is not allowed.

10. The communication device according to claim 9, wherein the determining whether the multiplexing transmission of the uplink channels having different priorities is allowed comprises:
determining, in accordance with configuration signaling, whether the multiplexing transmission of the uplink channels having different priorities is allowed,
wherein the configuration signaling comprises at least one of:
DCI in a downlink control channel corresponding to the uplink channel, wherein the DCI carries indication information; or
high-layer signaling.

11. The communication device according to claim 10, wherein the indication information indicates whether the multiplexing transmission of the uplink channels is allowed, or
the indication information indicates information for determining a reference bit quantity *m* of UCI having a low priority which is transmitted simultaneously with UCI having a high priority on a same uplink channel, wherein the UCI having the low priority and the UCI having the high priority are UCIs carried on the overlapped uplink channels respectively, and the reference bit quantity *m* is used for determining whether the multiplexing transmission of the uplink channels is allowed.

12. The communication device according to claim 9, wherein the determining whether the multiplexing transmission of the uplink channels having different priorities is allowed comprises:
determining a reference bit quantity n of UCI having a low priority which is transmitted simultaneously with UCI having a high priority on a same uplink channel in accordance with a bit quantity of the UCI having the high priority or a bit range corresponding to the bit quantity, wherein each bit quantity of UCI having the high priority or each bit range corresponding to the bit quantity corresponds to the reference bit quantity *n* of UCI having the low priority, wherein the UCI having the low priority and the UCI having the high priority are UCIs carried on the overlapped uplink channels respectively; and
determining, in accordance with the reference bit quantity *n,* whether the multiplexing transmission of the uplink channels having different priorities is allowed.

13. The communication device according to claim 9, wherein the communication device is a base station, and the processor is further configured to implement: in case that it is determined that the uplink channels do not need to meet the predetermined timeline, omitting a step of ensuring that the uplink channels meet the predetermined timeline when scheduling or configuring the uplink channels.

14. The communication device according to claim 9, wherein the communication device is a base station, and the processor is further configured to implement: in case that it is determined that the uplink channels need to meet the predetermined timeline, ensuring that the uplink channels meet the predetermined timeline when scheduling or configuring the uplink channels.

15. The communication device according to claim 9, wherein the communication device is a terminal, and the processor is further configured to implement: in case that it is determined that the uplink channels need to meet the predetermined timeline, checking, prior to the multiplexing transmission, whether the uplink channels meet the predetermined timeline.

16. The communication device according to claim 9, wherein the communication device is a terminal, and the processor is further configured to implement: in case that it is determined that the uplink channels do not need to meet the predetermined timeline, omitting a step of checking, prior to the multiplexing transmission, whether the uplink channels meet the predetermined timeline.

17. A channel multiplexing apparatus, comprising:
a first determination unit, configured to determine whether uplink channels having different priorities are allowed to be multiplexed for transmission in case that the uplink channels overlap in a time domain;
a second determination unit, configured to determine that the uplink channels need to meet a predetermined timeline in case that it is determined that the multiplexing transmission of the uplink channels is allowed; and
a third determination unit, configured to determine that the uplink channels do not need to meet the predetermined timeline in case that it is determined that the multiplexing transmission of the uplink channels is not allowed.

18. A processor-readable storage medium storing therein a computer program, wherein the computer program is configured to be executed by a processor, to implement the channel multiplexing method according to any one of claims 1 to 8.
